(19) Europäisches Patentamt
European Patent Office
Office européen des brevets

(11) Veröffentlichungsnummer: **0 030 695**
**A1**

(12) # EUROPÄISCHE PATENTANMELDUNG

(21) Anmeldenummer: **80107712.4**

(22) Anmeldetag: **08.12.80**

(51) Int. Cl.³: **D 06 P 5/00**
C 09 B 29/08

(30) Priorität: **13.12.79 DE 2950036**

(43) Veröffentlichungstag der Anmeldung:
**24.06.81 Patentblatt 81/25**

(84) Benannte Vertragsstaaten:
**CH DE FR GB IT LI**

(71) Anmelder: **CASSELLA Aktiengesellschaft**
**Hanauer Landstrasse 526**
**D-6000 Frankfurt am Main 61(DE)**

(72) Erfinder: **Tappe, Horst, Dr.**
**Ringstrasse 9**
**D-6057 Dietzenbach(DE)**

(72) Erfinder: **Schuster, Claus**
**Ulmenstrasse 30**
**D-6232 Hofheim(DE)**

(74) Vertreter: **Urbach, Hans-Georg, Dr.**
**Hanauer Landstrasse 526**
**D-6000 Frankfurt am Main 61(DE)**

(54) **Verfahren zum Bedrucken von synthetischem, hydrophobem Fasermaterial nach dem Transferdruckprinzip.**

(57) Bedrucken von synthetischem, hydrophobem Fasermaterial oder von Mischungen von synthetischem, hydrophobem Fasermaterial mit präparierten Cellulosematerialien oder präparierten Cellulosematerialien nach dem Transferdruckprinzip mit sublimierbaren Azofarbstoffen der allgemeinen Formel II

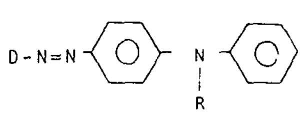 (II)

worin D einen Phenylkern, der gegebenenfalls bis zu 3 gleiche oder verschiedene Substituenten der Reihe F, Cl, Br, $CF_3$, CN, $NO_2$, Alkyl mit 1 bis 5 C-Atomen, Alkenyl mit 3 bis 4 C-Atomen oder Alkoxy mit 1 bis 3 C-Atomen tragen kann, oder einen fünfgliedrigen, heterocyclischen aromatischen, gegebenenfalls substituierten Rest und R eine geradkettige oder verzweigte Alkylgruppe mit 1 bis 6 C-Atomen, die gegebenenfalls noch einen Substituenten der Reihe CN, F, Cl, Br tragen kann, oder eine Alkenylgruppe mit 3 bis 5 C-Atomen, die gegebenenfalls noch einen Substituenten der Reihe F, Cl, Br tragen kann, bedeuten.

EP 0 030 695 A1

Ref. 3163
Dr.Eu/Ll

Verfahren zum Bedrucken von synthetischem, hydrophobem Fasermaterial nach dem Transferdruckprinzip

Beim Transferdruck wird ein mit der Transferdruckfarbe bedruckter Hilfsträger, im allgemeinen Papier, auf einem Kalander oder einer Bügelpresse auf das zu bedruckende Textilmaterial bei erhöhter Temperatur aufgedrückt. Dabei wird der Farbstoff durch Sublimation auf das Textilmaterial übertragen. Die erhaltenen Textildrucke besitzen eine hervorragende Punkt- und Konturschärfe und benötigen keine der üblicherweise im Textildruck erforderlichen Nachbehandlungen, wie Dämpfen, Fixieren oder Waschen.

In der DE-AS 19 44 800 sind Farbstoffe der Formel I

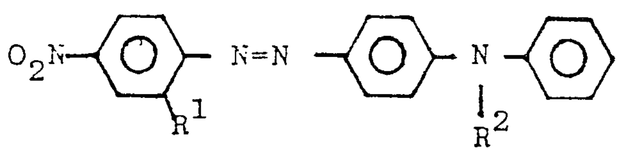

(I)

beschrieben, worin $R^1$ Chlor, Brom, Cyan, Hydroxy oder Alkoxy mit 1 bis 4 C-Atomen und $R^2$ Wasserstoff oder Alkyl mit 1 bis 4 C-Atomen bedeutet und der die Nitrogruppe und den Rest $R^1$ tragende Ring auch weiter durch Chlor oder Brom substituiert sein kann. In dieser Auslegeschrift ist auch beschrieben, daß diese Farbstoffe nicht sublimieren.

Überraschenderweise wurde nun gefunden, daß die Farbstoffe der nachstehenden Formel II für das Transferdruckverfahren besonders gut geeignet sind. Die vorliegende Erfindung betrifft daher ein Verfahren zum Bedrucken von synthetischem, hydrophobem Fasermaterial oder von Mischungen von synthetischem, organischem Fasermaterial mit präparierten Cellulosefasern, ferner präparierten oder modifizierten Cellulosefasern nach dem Transferdruckprinzip, das dadurch gekennzeichnet ist, daß man als sublimierbare Farbstoffe Azofarbstoffe der allgemeinen Formel II

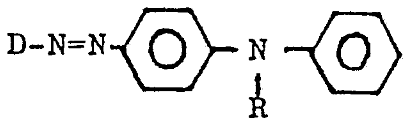 (II)

verwendet, worin D ein Phenylkern, der gegebenenfalls bis zu 3 gleiche oder verschiedene Substituenten der Reihe F, Cl, Br, $CF_3$, CN, $NO_2$, Alkyl mit 1 bis 5 C-Atomen, Alkenyl mit 3 bis 4 C-Atomen oder Alkoxy mit 1 bis 3 C-Atomen tragen kann, oder einen fünfgliedrigen heterocyclischen aromatischen, gegebenenfalls substituierten Rest und R eine Alkylgruppe mit 1 bis 6 C-Atomen, die gegebenenfalls noch einen Substituenten der Reihe CN, F, Cl, Br tragen kann, oder eine Alkenylgruppe mit 3 bis 5 C-Atomen, die gegebenenfalls noch einen Substituenten der Reihe F, Cl, Br tragen kann, bedeuten. Als fünfgliedrige heterocyclische Reste kommen insbesondere Thienyl-, Thiazolyl-, Isothiazolyl-, Thiadiazolyl- und Imidazolyl-Reste in Betracht, die gegebenenfalls auch noch bis zu drei gleiche oder verschiedene Substituenten aus der Reihe Alkyl mit 1 bis 4 C-Atomen, insbesondere Methyl, Alkylsulfonyl mit 1 bis 4 C-Atomen im Alkylrest, insbesondere Methylsulfonyl, Cyan und Nitro tragen können. Alle Alkyl-, Alkenyl- oder Alkoxy-Reste können geradkettig oder verzweigt sein.

Die Farbstoffe der Formel II werden nach an sich bekannten Verfahren hergestellt indem man eine Diazokomponente der Formel III diazotiert und mit einer Kupplungskomponente der Formel IV

$D-NH_2$ (III) 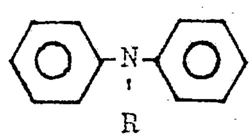 (IV)

worin D und R die bereits angegebenen Bedeutungen besitzen, vereinigt.

Als Diazokomponenten der Formel III kommen z.B. in Frage: Anilin, o-Toluidin, m-Toluidin, p-Toluidin, o-Trifluormethylanilin, m-Trifluormethylanilin, p-Trifluormethylanilin, o-Fluoranilin, m-Fluoranilin, p-Fluoranilin, o-Chloranilin, m-Chloranilin, p-Chloranilin, 2,4-Chloranilin, 2,5-Dichloranilin, 2,6-Dichloranilin, o-Cyananilin, m-Cyananilin, p-Cyananilin, o-Cyan-p-brom-anilin, p-Cyan-o-bromanilin, o-Nitroanilin, m-Nitroanilin, p-Nitroanilin, 2-Chlor-4-nitroanilin, 2-Brom-4-nitroanilin, 4-Chlor-2-nitroanilin, 2-Methyl-4-nitroanilin, 4-Methyl-2-nitroanilin, 2-Cyan-4-nitroanilin, 2,6-Dicyan-4-nitroanilin, 2-Fluor-4-nitroanilin, 2-Trifluormethyl-4-nitroanilin, 2,4-Dinitro-6-chloranilin, 2,4-Dinitro-6-bromanilin, 2-Cyan-4-nitro-6-chloranilin, 2,4-Dinitro-6-cyananilin, 2,6-Dichlor-4-nitroanilin, 2-Brom-4-nitro-6-chloranilin, 2-Amino-thiophen, 3-Cyan-2-aminothiophen, 3-Nitro-2-aminothiophen, 3,5-Dicyan-2-aminothiophen, 3,5-Dinitro-2-aminothiophen, 3-Cyan-5-nitrothiophen, 2-Amino-thiazol, 2-Amino-5-nitro-thiazol, 2-Amino-4-methyl-5-nitrothiazol, 2-Amino-5-methylsulfonyl-thiazol, 2-Cyan-3-amino-4-methyl-isothiazol-(1,5), 2-Amino-5-methyl-thiadiazol(1,3,4), 2-Amino-3-nitro-4-methyl-thiazol(1,5), 2-Amino-5-methylsulfonyl-thiadiazol-(1,3,4), 2-Amino-4-methylsulfonyl-thiadiazol(1,3,5), 1-Methyl-2-amino-4,5-dicyan-imidazol.

Als Kupplungskomponente der Formel IV kommen z.B. in Frage: N-Methyl-diphenylamin, N-Ethyldiphenylamin, N-Propyl-diphenylamin, N-iso-Propyl-diphenylamin, N-n-Butyl-diphenylamin, N-sec.-Butyl-diphenylamin, N-n-Hexyl-diphenylamin. Die Herstellung der Kupplungskomponenten kann nach literaturbekannten Verfahren erfolgen, wie sie z.B. in Teintex 1970, S. 401-419, J.Amer.Chem.Soc. 96, S.7812-14 (1974), J.chem.Soc. 123, 831 (1923) beschrieben sind.

Bevorzugt verwendet werden Farbstoffe der Formel V und VI

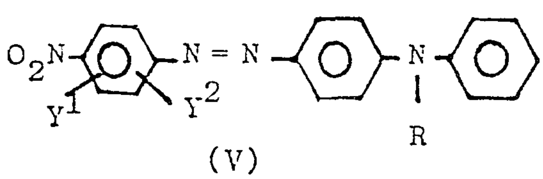

(V)

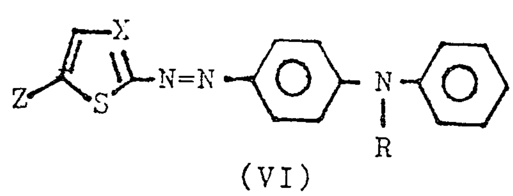

(VI)

worin $Y^1$, $Y^2$ gleiche oder verschiedene Reste aus der Reihe H, $NO_2$, F, Cl, Br, CN, $CF_3$, Alkyl mit 1 bis 5 C-Atomen, vorzugsweise Methyl, Alkenyl mit 3 bis 4 C-Atomen oder Alkoxy mit 1 bis 3 C-Atomen, Z = H, $NO_2$, CN, $SO_2CH_3$ bedeuten X für N

oder $C-R^3$ steht, wobei der Rest $R^3$ H, $NO_2$, CN bedeutet und R die bereits genannte Bedeutung, vorzugsweise $CH_3$ oder $C_2H_5$ besitzen.

Besonders geeignet für das erfindungsgemäße Verfahren sind die Farbstoffe der Formeln VII und VIII

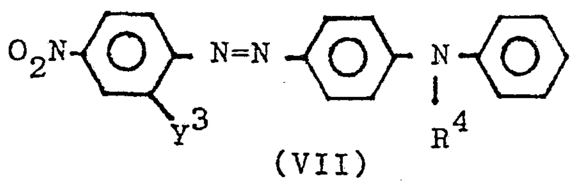
(VII)

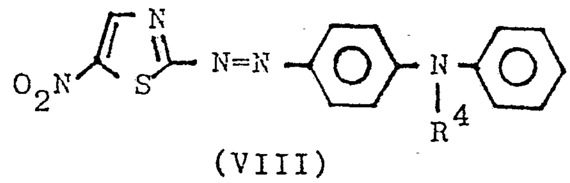
(VIII)

worin $Y^3$ = H, Cl, Br, CN, $SO_2CH_3$ und $R^4$ = $CH_3$ oder $C_2H_5$ bedeuten.

Das Transferdruckverfahren ist z.B. in den französichen Patentschriften 1.223.330 und 1.334.829 beschrieben worden. Die Farbstoffe werden z.B. in Form von Drucktinten, wie sie z.B. in der französischen Patentschrift 1.573.698 beschrieben sind, oder als Pasten auf Hilfsträger, wie Papier, andere Cellulosematerialien, wie Baumwolle oder Cellophan, Metallfolien und dergleichen, wie sie aus der französischen Patentschrift 1.575.069 bekannt sind, durch Foulardieren, Pflatschwalzen oder Spritzpistolen aufgebracht. Die Farbstoffe können auf die Hilfsträger auch nach Druckverfahren mit üblichen Druckmaschinen wie z.B. Rouleaux-, Tief-, Rotationsschablonen-, Flachschablonen-, Relief- oder Flexo-Druckmaschinen aufgebracht werden. Die Drucktinten stellen gegebenenfalls kunstharzhaltige Farbstofflösungen oder -dispersionen in geeigneten, organischen Lösungsmitteln, beispielsweise Kohlenwasserstoffen, wie z.B. Benzol, Toluol, Xylol, Chlorkohlenwasserstoffen, wie z.B. Chlorbenzol, Chloroform, Dichloräthan, Trichloräthylen, Perchloräthylen, Alkoholen, wie z.B. Ethanol, iso-Propanol, Benzylalkohol und Estern, wie z.B. Essigester und deren Mischungen dar.

Bei wäßrigen Systemen liegen die Farbstoffe in fein dispergierter Form vor. Die damit hergestellten Druckfarben enthal-

ten Verdickungsmittel, wie z.B. Kernmehlderivate oder Alginate oder synthetische Verdicker, wie z.B. veresterte und/oder verätherte Cellulosederivate, bevorzugt in Kombination mit Ethanol.

Für den Transferdruck mit Farbstoffen der Formel II geeignete Substrate sind textile Materialien, die aus Polyester, Cellulosetriacetat, Cellulose 2 1/2-acetat, Polyamid, Polyacrylnitril, gegebenenfalls präparierte oder modifizierte Cellulosefasern und Mischungen dieser Fasern bestehen, aber auch nichttextile Gegenstände, wie Folien, Bänder oder Blöcke aus hanselsüblichen Polymerisat- oder Polykondensatkunststoffen. Vom Hilfsträger werden die Farbstoffe auf das zu bedruckende Material durch Hitzeeinwirkung bei 140 - 250°C, vorzugsweise bei 160 - 220°C, während 15 - 60 Sekunden oder länger übersublimiert. Die Hitzeeinwirkung kann auf verschiedene Weise, z.B. durch Heißluft, Heißdampf, Infrarotstrahlung oder Kontakthitze, gegebenenfalls auch unter Anwendung von vermindertem Druck, erfolgen.

Die erfindungsgemäß benutzten Farbstoffe der Formel II liefern insbesondere auf Polyester, aber auch auf präparierten Polyester-Baumwoll-Mischfasern und präparierten Cellulosefasern Drucke mit vorzüglichen Farbausbeuten, d.h. hohen Farbstärken, und mit exzellenten Echtheiten, wie z.B. Lichtechtheit, Waschechtheit bei 40° und 60°C und Wasserechtheit. In den nachfolgenden Beispielen sind Teile Gewichtsteile, Prozente, sofern nichts anderes angegeben, Gewichtsprozente.

Beispiel 1

75 Teile des Farbstoffs der Formel

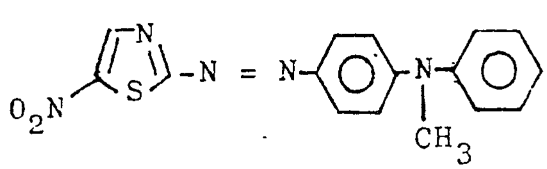

50 g eines anionischen Dispergiermittels, wie z.B. eines Ligninsulfonates oder eines Kondensationsproduktes aus Naphthalinsulfonsäure und Formaldehyd, und 100 Teile Wasser werden in einer Kugelmühle durch achtstündiges Mahlen in eine feinverteilte Form übergeführt. 50 - 200 Teile der so erhaltenen, wäßrigen Dispersion werden mit 400 Teilen einer 10%igen Johannisbrotkernmehlätherverdickung und 550 bis 400 Teilen Wasser angeteigt. Mit dieser Druckpaste wird ein Papier im Tiefdruckverfahren bedruckt. Verpreßt man dieses Papier während 15 bis 60 Sekunden bei 200°C mit einem Textil aus Polyesterfasern, so erhält man einen klaren, farbstarken, marineblauen Druck mit guten Echtheiten.

Der Farbstoff wurde auf folgendem Wege hergestellt: Eine Lösung von 0,2 Mol diazotiertem 2-Amino-5-nitrothiazol in einem Gemisch aus Schwefelsäure, Essigsäure und Propionsäure (erhalten nach der Vorschrift des Beispiels 1 von DE-AS 1 019 415) wird bei 0 bis +5°C zu einer Lösung von 29,3g N-Methyl-diphenylamin in 200 ml einer Mischung von Propionsäure und Essigsäure (Volumenverhältnis 1:6), die in einem Eisbad gekühlt wird, zugesetzt. Nach einer kurzen Zeit wird die Reaktionsmischung gegen Kongopapier neutralisiert, indem man Natriumacetat portionsweise zusetzt und das Kupplungsgemisch 2 bis 3 Stunden lang sich selbst überläßt. Die Mischung wird dann in Eiswasser gegossen und nach kurzem Rühren der entstandene Azofarbstoff durch Filtrieren isoliert. Es wird gründlich mit Wasser gewaschen und getrocknet. Man erhält 62 g Farbstoff.

Beispiel 2

40 Teile des Farbstoffs der Formel

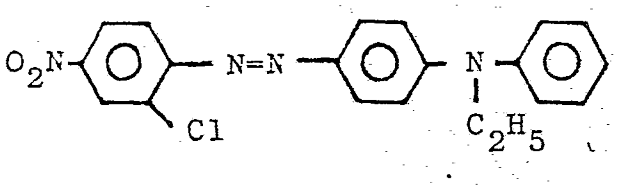

werden mit 60 Teilen Kolophonium bei 100 bis 110°C in einem Kneter bis zur vollständigen Homogenisierung geknetet und nach dem Abkühlen auf einer der üblichen Mühlen gemahlen. Man erhält ein feinkörniges Farbstoffpulver.

100 Teile der 40 %igen Farbstoffpräparation werden in 960 Tei-

len Firnis (beispielsweise ein Gemisch aus 20 % kolophoniummodifiziertem Maleinat-Harz, 10 % Polyvinylbutyral, 65 % Ethanol und 5 % Ethylglykol) eingerührt. Mit der so erhaltenen Drucktinte wird im Tiefdruck Papier bedruckt. Verpreßt man dieses Papier während 15 bis 60 Sekunden bei 200°C mit einem Gewebe aus Polyesterfasern, so erhält man einen farbstarken, roten Druck mit guten Echtheiten.

Führt man, entsprechend den Beispielen 1 und 2, mit den in den nachfolgenden Beispielen angegebenen Farbstoffen Transferdrucke auf Polyestergewebe durch, so erhält man Drucke hoher Farbstärke und guten Echtheiten in den angegebenen Nuancen:

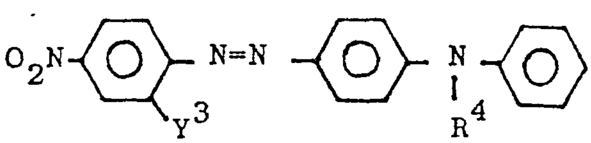

| Beispiel | $Y^3$ | $R^4$ | Farbton auf PES | Beispiel | $Y^3$ | $R^4$ | Farbton auf PES |
|---|---|---|---|---|---|---|---|
| 3 | $NO_2$ | $C_2H_5$ | Rubin | 8 | CN | $C_2H_5$ | Rubin |
| 4 | H | $CH_3$ | Scharlach | 9 | $CH_3$ | $CH_3$ | Scharlach |
| 5 | Cl | $CH_3$ | Rot | 10 | $CH_3$ | $C_2H_5$ | Scharlach |
| 6 | $NO_2$ | $CH_3$ | Rubin | 11 | $NO_2$ | $CH_3$ | Rubin |
| 7 | CN | $CH_3$ | Rubin | | | | |

12 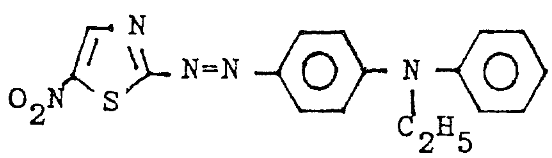 Marine

13 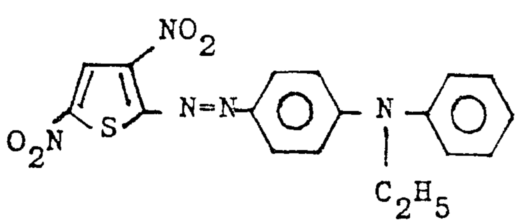 Marine

PATENTANSPRÜCHE

1. Verfahren zum Bedrucken von synthetischem, hydrophobem Fasermaterial oder von Mischungen von synthetischem, hydrophobem Fasermaterial mit präparierten Cellulosematerialien oder präparierten Cellulosematerialien nach dem Transferdruckprinzip, dadurch gekennzeichnet, daß man als sublimierbaren Farbstoff einen Azofarbstoff der allgemeinen Formel II

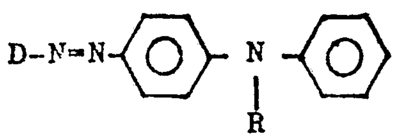 (II)

verwendet, worin D einen Phenylkern, der gegebenenfalls bis zu 3 gleiche oder verschiedene Substituenten der Reihe F, Cl, Br, $CF_3$, CN, $NO_2$, Alkyl mit 1 bis 5 C-Atomen, Alkenyl mit 3 bis 4 C-Atomen oder Alkoxy mit 1 bis 3 C-Atomen tragen kann, oder einen fünfgliedrigen, heterocyclischen aromatischen, gegebenenfalls substituierten Rest und R eine geradkettige oder verzweigte Alkylgruppe mit 1 bis 6 C-Atomen, die gegebenenfalls noch einen Substituenten der Reihe CN, F, Cl, Br tragen kann, oder eine Alkenylgruppe mit 3 bis 5 C-Atomen, die gegebenenfalls noch einen Substituenten der Reihe F, Cl, Br tragen kann, bedeuten.

2. Verfahren nach Anspruch 1, dadurch gekennzeichnet, daß D einen Thienyl-, Thiazolyl-, Isothiazolyl-, Thiadiazolyl- oder Imidazolyl-Rest bedeutet.

3. Verfahren nach den Ansprüchen 1 oder 2, dadurch gekennzeichnet, daß der für D stehende fünfgliedrige, heterocyclische oder aromatische Rest bis zu 3 gleiche oder verschiedene Substituenten aus der Reihe Alkyl mit 1 bis 4 C-Atomen, vorzugsweise Methyl, Alkylsulfonyl mit 1 bis 4 C-Atomen im Alkylrest, vorzugsweise Methylsulfonyl, Cyan und Nitro trägt.

4. Verfahren nach Anspruch 1, dadurch gekennzeichnet, daß man einen Farbstoff der Formel V

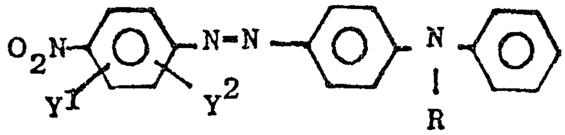

(V)

verwendet, worin $Y^1$, $Y^2$ gleiche oder verschiedene Reste aus der Reihe Wasserstoff, $NO_2$, F, Cl, Br, CN, $CF_3$ Alkyl mit 1 bis 5 C-Atomen, Alkenyl mit 3 bis 4 C-Atomen oder Alkoxy mit 1 bis 3 C-Atomen bedeuten und R die in Anspruch 1 angegebene Bedeutung, vorzugsweise Methyl oder Ethyl, besitzt.

5. Verfahren nach Anspruch 1, dadurch gekennzeichnet, daß man einen Farbstoff der Formel VI

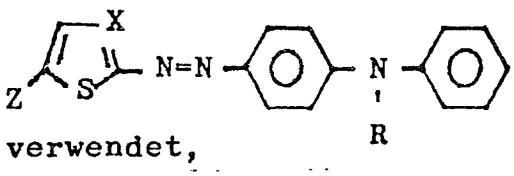

(VI)

verwendet,
worin Z Wasserstoff oder $NO_2$, CN, $SO_2CH_3$ bedeutet, X für Stickstoff oder C-$R^3$ steht, wobei der Rest $R^3$ Wasserstoff oder $NO_2$ oder CN bedeutet, und R die in Anspruch 1 angegebene Bedeutung, vorzugsweise Methyl oder Ethyl, besitzt.

6. Verfahren nach den Ansprüchen 1 und 4, dadurch gekennzeichnet, daß man einen Farbstoff der Formel VII

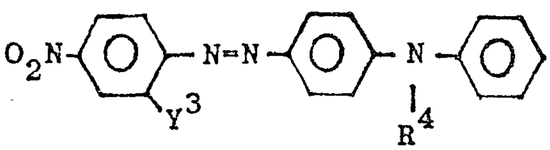

(VII)

verwendet, worin $Y^3$ Wasserstoff oder Cl, Br, CN, $NO_2$, $CH_3$ und $R^4$ Methyl oder Ethyl bedeuten.

7. Verfahren nach den Ansprüchen 1 und 5, dadurch gekennzeichnet, daß man einen Farbstoff der Formel VIII

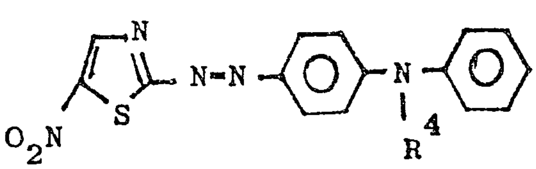

(VIII)

verwendet, worin $R^4$ Methyl oder Ethyl bedeutet.

Europäisches Patentamt

# EUROPÄISCHER RECHERCHENBERICHT

Nummer der Anmeldung
EP 80 10 7712

| Kategorie | EINSCHLÄGIGE DOKUMENTE<br>Kennzeichnung des Dokuments mit Angabe soweit erforderlich, der maßgeblichen Teile | betrifft Anspruch | KLASSIFIKATION DER ANMELDUNG (Int Cl.³) |
|---|---|---|---|
| X | DE - A - 2 364 205 (BAYER)<br>* Ansprüche 1,2,5-9; Seite 4, rechte Spalte "vorletzte Kupplungskomponente"; Seite 6 ganz; Beispiel 1 und insbesondere Seite 8, Tabelle "vorletzte Kupplungskomponente"; Beispiel 3 und insbesondere Seite 13, Absatz 4 und Beispiel 4 *<br>-- | 1,4 | D 06 P 5/00<br>C 09 B 29/08 |
| | DE - A - 2 708 441 (BAYER)<br>* Ansprüche 3-7,13; Seite 6, Formel III; Seite 7, letzte Zeile bis Seite 8, vorletzter Absatz; Seite 18, Beispiele 72-74 *<br>-- | 1-3 | RECHERCHIERTE SACHGEBIETE (Int. Cl.³)<br>D 06 P 5/00<br>1/18<br>B 41 M 5/02<br>5/26<br>C 09 D 11/02<br>C 09 B 29/09<br>29/085<br>29/08 |
| A | DE - A - 2 832 179 (CIBA-GEIGY)<br>* Ansprüche 1,5-8,13,14 *<br>-- | 1 | |
| A | DE - A - 2 602 173 (EASTMAN KODAK)<br>* Ansprüche 1,8,9; Seite 3, Absatz 4 bis Seite 5 ganz; Seite 6, erster und letzter Absatz; Seite 7 ganz; Seite 8, Absätze 1,2 *<br>-- | 1 | KATEGORIE DER GENANNTEN DOKUMENTE<br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument |
| A | CHEMICAL ABSTRACTS, Band 90, Nr. 14, 2. April 1979, Seiten 95-96, Zusammenfassung Nr. 105621q, Columbus, Ohio, US,<br>./. | 5 | &: Mitglied der gleichen Patentfamilie, übereinstimmendes Dokument |

X Der vorliegende Recherchenbericht wurde für alle Patentansprüche erstellt

| Recherchenort | Abschlußdatum der Recherche | Prüfer |
|---|---|---|
| Den Haag | 06-03-1981 | DEKEIREL |

Europäisches Patentamt

# EUROPÄISCHER RECHERCHENBERICHT

Nummer der Anmeldung
EP 80 10 7712
-2-

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der Maßgeblichen Teile | betrifft Anspruch | |
| | & JP - A - 78 122 878 (MITSUBISHI CHEMICAL INDUSTRIES)(26-10-1978)<br>-- | | |
| DA | DE - B - 1 944 800 (YORKSHIRE CHEMICALS)<br>* Das ganze Dokument *<br>-- | 4,6 | |
| A | US - A - 2 683 709 (J.B. DICKEY et al.)<br>* Spalte 9, Beispiel 28 *<br>----- | 7 | RECHERCHIERTE SACHGEBIETE (Int. Cl.³) |